# FASCICULE DE BREVET EUROPEEN

(11) **EP 3 429 436 B1**
(45) Date de publication et mention de la délivrance du brevet: **08.04.2020**
(21) Numéro de dépôt: 17716950.5
(22) Date de dépôt: 16.03.2017
(51) Int. Cl.: A47J 19/02, A23N 1/02

(54) **APPAREIL DE PRESSAGE D'ALIMENTS ÉQUIPÉ D'UN SYSTÈME DE RANGEMENT DES TAMBOURS**
VORRICHTUNG ZUM PRESSEN VON NAHRUNGSMITTELN MIT EINEM TROMMELSPEICHERSYSTEM
DEVICE FOR PRESSING FOODSTUFFS EQUIPPED WITH A DRUM STORAGE SYSTEM

(30) Priorité: 17.03.2016 FR 1652284
(43) Date de publication de la demande: 23.01.2019
(73) Titulaire: SEB S.A., 69130 Ecully (FR)
(72) Inventeur: RAUDE, Christian, 64160 Buros (FR); CYPRES, Régis, 65100 Lourdes (FR)
(74) Mandataire: Bourrières, Patrice
(86) Numéro de dépôt international: PCT/FR2017/050616
(87) Numéro de publication internationale: WO 2017/158305

(56) Documents cités:
- WO-A2-2013/072597

## Description

### Domaine technique

La présente invention se rapporte au domaine des appareils électroménagers de type appareil de pressage d'aliments.

La présente invention concerne notamment, mais non exclusivement, les appareils de pressage d'aliments utilisés pour extraire le jus des fruits et/ou des légumes, plus couramment appelés pressoirs à jus, ou encore extracteurs de jus lents.

L'invention porte tout particulièrement sur les appareils de pressage d'aliments qui comprennent une vis de pressage à axe de rotation principalement vertical, ainsi que plusieurs tambours prévus pour recevoir ladite vis de pressage, ces tambours pouvant être filtrants pour filtrer plus ou moins le jus et le séparer de la matière sèche sous l'action de la vis de pressage, de sorte à préparer des jus ou des coulis vitaminés, voire des purées, selon la conception desdits tambours.

### Etat de la technique

Les appareils de pressage d'aliments, équipés d'une vis de pressage à axe de rotation vertical et d'au moins un tambour, sont connus de l'homme du métier. De tels appareils de pressage ont des performances accrues en termes d'extraction du jus des fruits et légumes, en comparaison d'autres types d'appareils d'extraction du jus, en particulier les centrifugeuses dont le rendement n'excède pas les 60% alors que les pressoirs à vis à axe de rotation vertical permettent d'obtenir un rendement pouvant atteindre 90% pour certains fruits et légumes.

A titre d'exemple, les documents WO2012036381A2, WO2013062166A1, CN203506346U et CN203873524U décrivent un appareil de pressage d'aliments qui comprend notamment un boîtier, un réceptacle, au moins deux tambours, une vis de pressage et un couvercle. Le boîtier permet la réception du réceptacle et intègre des moyens d'entraînement en rotation de la vis de pressage selon un axe vertical. Le réceptacle, également appelé bol, comprend un premier conduit d'évacuation des jus et un second conduit d'évacuation des matières sèches. Chaque tambour présente une forme tronconique configurée pour être logée dans le réceptacle. Le tambour permet de filtrer les jus ou coulis et de les évacuer par le premier conduit d'évacuation, et permet d'évacuer les matières sèches vers le second conduit. La vis de pressage se loge dans le tambour, la configuration entre ces éléments permettant à la vis de presser les aliments contre la face interne de la paroi du tambour, durant la rotation de ladite vis de pressage. Le couvercle est assemblé avec la partie supérieure du réceptacle et comprend au moins une embouchure qui communique avec le tambour et la vis de pressage, et qui permet l'introduction des aliments entiers voire prédécoupés, selon la configuration dudit conduit.

Dans une autre réalisation, telle que décrite par exemple dans le document WO2013072597A2, on retrouve des caractéristiques comparables à celles précitées pour les tambours, la vis de pressage et le couvercle, la différence portant sur le réceptacle qui est constitué d'un déflecteur présentant une forme tronconique dans laquelle se logent le tambour et la vis de pressage. Le réceptacle comprend en partie inférieure une ouverture permettant le passage du jus extrait au travers de la paroi du tambour et le passage de la matière sèche extraite par une ouverture inférieure sur le tambour. En outre, le premier conduit d'évacuation des jus et le second conduit d'évacuation des matières sèches sont agencés sur la partie supérieure du boîtier. Pour cela, un collecteur ou récepteur des jus est configuré pour être positionné sur le boîtier, le réceptacle reposant sur le collecteur lors de son positionnement sur le boîtier. Ce collecteur comprend une ouverture configurée pour laisser passer les matières sèches passant au travers de l'ouverture inférieure du réceptacle et pour communiquer avec le second conduit. Par ailleurs, le collecteur comprend une goulotte circulaire permettant de collecter les jus passant au travers de l'ouverture inférieure du réceptacle, cette goulotte débouchant sur le premier conduit. Le couvercle est fixé sur la partie supérieure du réceptacle, comme précédemment.

Ces différentes conceptions de l'art antérieur présentent pour inconvénient de nécessiter le rangement des tambours séparément de l'appareil de pressage. En effet, lorsque l'appareil de pressage n'est pas utilisé, l'utilisateur peut positionner l'un des tambours et la vis de pressage dans le réceptacle, lui-même disposé sur le boîtier, puis fermer le réceptacle avec le couvercle, après avoir nettoyé préalablement lesdits éléments. L'utilisateur doit cependant ranger ailleurs le ou les autres tambours, par exemple dans une armoire ou dans le carton d'emballage, ce qui encombre l'espace de rangement dans la cuisine.

### Résumé de l'invention

La présente invention pallie cet inconvénient précité. A cet effet, l'invention concerne un appareil de pressage d'aliments. L'appareil comprend un réceptacle muni d'une partie supérieure ouverte. L'appareil comprend au moins deux tambours interchangeables, ces tambours étant configurés pour être logés individuellement dans le réceptacle en mode d'utilisation de l'appareil. L'un au moins des tambours présente une paroi latérale filtrante, pour filtrer plus ou moins le jus. L'appareil comprend aussi une vis de pressage configurée pour être logée dans le tambour en mode d'utilisation et pour presser les aliments contre ledit tambour, durant la rotation de ladite vis de pressage. L'appareil comprend également un couvercle configuré pour être assemblé avec la partie supérieure du réceptacle en mode d'utilisation dudit appareil. En outre, l'appareil comprend une bague qui comporte une partie inférieure ouverte configurée pour être assemblée avec la partie supérieure ouverte du réceptacle, et une partie supérieure ouverte configurée pour être assemblée avec le couvercle. La bague est configurée pour que son assemblage entre le réceptacle et le couvercle permette de définir un espace de rangement configuré pour recevoir au moins deux des tambours, et de préférence tous les tambours, ainsi que la vis de pressage, en mode de rangement de l'appareil. Ainsi, à la différence des appareils de pressage de l'art antérieur tels que ceux précités, la conception selon l'invention permet de ranger plusieurs tambours et la vis de pressage à l'intérieur de l'appareil lorsqu'il n'est pas utilisé, ce qui permet de conserver à portée de main les tambours les plus utilisés, et dans la version préférée de l'invention, évite de devoir ranger les tambours dans une armoire ou autre, séparément de l'appareil qui reste généralement à disposition permanente sur le plan de travail dans la cuisine. Cela favorise un meilleur rangement et une accessibilité immédiate aux tambours lors de l'utilisation de l'appareil.

Selon l'appareil de pressage objet de l'invention, les tambours sont de forme tronconique, lesdits tambours étant configurés pour être engagés les uns dans les autres dans l'espace de rangement, en la présence de la bague entre le réceptacle et le couvercle. En outre, la vis de pressage est logée dans le tambour supérieur en mode de rangement.

Dans une réalisation de l'appareil de pressage selon l'invention, la partie supérieure et les dimensions de la bague sont configurées pour que la partie supérieure du tambour supérieur et la partie supérieure de la vis de pressage viennent se loger dans le couvercle lors de son positionnement sur ladite bague, en mode de rangement.

Selon une première configuration de l'appareil de pressage selon l'invention, comparable à celle des appareils de pressage décrits dans les documents WO2012036381A2, WO2013062166A1, CN203506346U et CN203873524U, le réceptacle comprend des premiers moyens d'évacuation des jus, coulis ou purées et des seconds moyens d'évacuation des matières sèches.

Dans une réalisation, selon cette première configuration de l'appareil de pressage, les premiers moyens d'évacuation comprennent un fond incliné et un premier conduit d'évacuation des jus, coulis ou purées, le fond incliné étant configuré pour diriger les jus ou coulis filtrés vers le premier conduit.

Dans une réalisation, les seconds moyens d'évacuation comprennent un second conduit d'évacuation des matières sèches prolongeant un passage traversant le fond du ou de l'un des tambours présentant une paroi latérale filtrante lorsque ledit tambour est agencé dans ledit réceptacle.

Dans une réalisation, l'un au moins des tambours présente une paroi latérale étanche et comprend en partie inférieure un conduit d'extraction de la purée qui communique avec le premier conduit.

Selon cette réalisation préférentielle, le tambour présentant une paroi latérale étanche est logé dans le réceptacle en mode de rangement, et reçoit le ou l'un des tambours présentant une paroi latérale filtrante. Le tambour à jus ou à coulis, disposé au-dessus et constituant le tambour supérieur, reçoit alors la vis de pressage.

Dans une réalisation préférentielle, l'appareil de pressage selon l'invention comporte trois tambours configurés pour réaliser respectivement des purées, des jus, et des coulis. On pourrait cependant prévoir des variantes avec plus de trois tambours voire avec seulement deux tambours, selon les variantes de filtration du jus que l'on souhaite obtenir, voire selon la configuration de l'appareil.

Selon cette première configuration, l'appareil de pressage comprend un boîtier configuré pour recevoir directement le réceptacle. Ce boîtier intègre des moyens d'entraînement en rotation d'un axe qui s'étend plus ou moins verticalement au-dessus dudit boîtier. Le réceptacle comprend un premier trou de passage de l'axe et les tambours comprennent chacun un second trou de passage de l'axe. En outre, des moyens de connexion sont mis en œuvre entre l'axe et la vis de pressage. Ainsi, la mise en place du réceptacle sur le boîtier puis d'un tambour dans le réceptacle permet ensuite d'engager les moyens de connexion entre la vis de pressage et l'axe, lors de l'insertion de ladite vis de pressage dans le tambour qui est utilisé.

Selon une seconde configuration de l'appareil de pressage objet de l'invention, comparable à celle de l'appareil de pressage décrit dans le document WO2013072597A2, celle-ci est conçue pour des tambours permettant la réalisation de jus ou de coulis. Selon cette seconde configuration, l'appareil comprend un boîtier muni de premiers moyens d'évacuation des jus ou coulis et de seconds moyens d'évacuation des matières sèches. En outre, le réceptacle est constitué d'un déflecteur comportant une ouverture inférieure configurée pour permettre le passage des jus, coulis, et matières sèches.

Dans une réalisation, selon cette seconde configuration, l'appareil de pressage comprend un collecteur agencé sur la partie supérieure du boîtier et recevant le réceptacle. Le collecteur comprend une gouttière configurée pour collecter les jus ou coulis et les acheminer jusqu'aux premiers moyens d'évacuation sur le boîtier. Le collecteur comprend également une ouverture configurée pour acheminer les matières sèches jusqu'aux seconds moyens d'évacuation. De préférence, le collecteur est amovible de sorte à faciliter le nettoyage de l'appareil de pressage. Dans une réalisation, le collecteur comprend un bec muni d'un système anti-goutte, ledit bec débouchant à l'extérieur du boîtier de l'appareil.

Selon l'appareil de pressage objet de l'invention, le couvercle comprend au moins une embouchure agencée au-dessus du tambour et de la vis de pressage en mode d'utilisation, ladite embouchure étant configurée pour acheminer les aliments et les insérer dans le tambour dans lequel est disposée la vis de pressage.

Avantageusement alors, la bague comprend des échancrures qui permettent de visualiser les tambours en position dans l'espace de rangement.

Avantageusement encore, les échancrures sont délimitées par des pattes issues de la partie supérieure de la bague.

### Brève description des figures

Les caractéristiques et avantages de l'appareil de pressage selon l'invention apparaîtront à la lecture de la description suivante, laquelle s'appuie sur des figures parmi lesquelles :
- la figure 1 illustre une vue d'ensemble d'une première configuration de l'appareil de pressage, en mode de rangement ;
- la figure 2 illustre une vue en coupe de la figure 1 ;
- la figure 3 illustre une vue d'ensemble éclatée de l'appareil selon cette première configuration ;
- la figure 4 illustre une vue d'ensemble d'un mode de réalisation du couvercle de l'appareil ;
- la figure 5 illustre une vue d'ensemble d'un mode de réalisation de la bague de l'appareil ;
- la figure 6 illustre une vue d'ensemble d'un mode de réalisation de la vis de pressage de l'appareil ;
- la figure 7 illustre une vue d'ensemble d'un mode de réalisation du tambour à jus ou à coulis de l'appareil ;
- les figures 8 et 9 illustrent deux vues d'ensemble d'un mode de réalisation du tambour à purée sur l'appareil ;
- les figures 10 et 11 illustrent deux vues d'ensemble d'un mode de réalisation du réceptacle selon cette première configuration de l'appareil ;
- la figure 12 illustre une vue d'ensemble de l'appareil de la figure 1 en mode d'utilisation, et met en évidence l'intérieur du boîtier ;
- la figure 13 illustre une vue d'ensemble éclatée de l'appareil de pressage, selon une seconde configuration.

### Description détaillée

Dans la suite de la description, les mêmes références sont utilisées pour décrire les caractéristiques similaires selon les différentes variantes de réalisation. En outre, l'appareil de pressage de fruits et/ou légumes est désigné « l'appareil ».

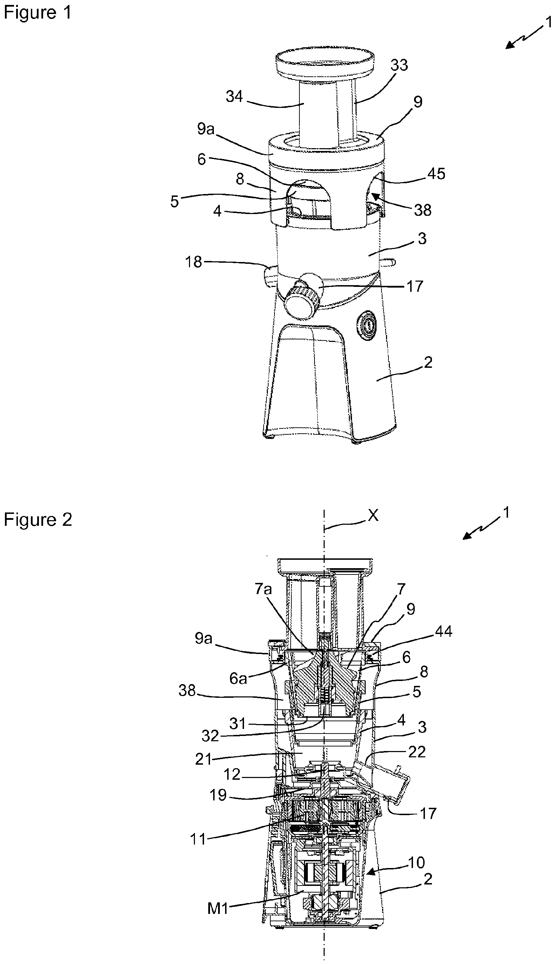

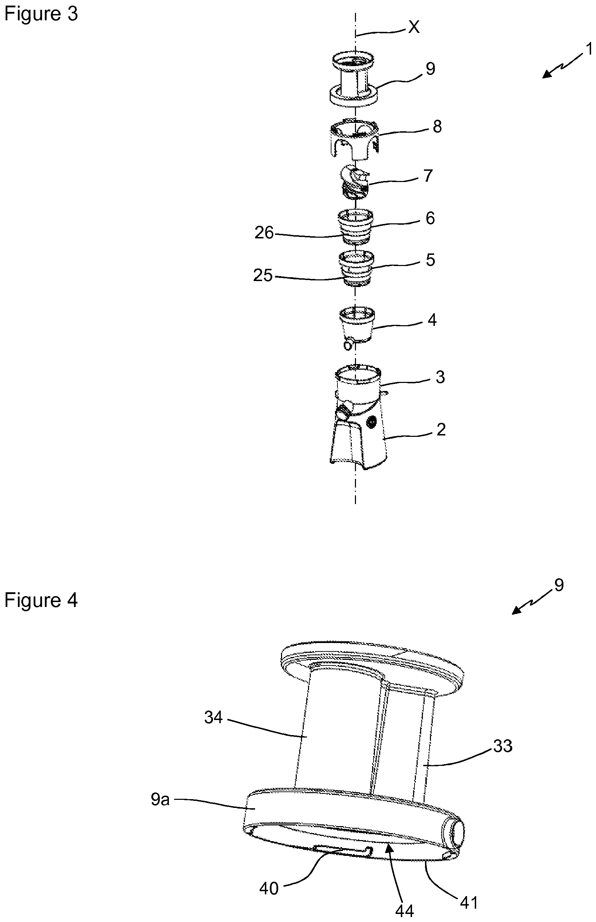

Tel qu'illustré sur les figures 1 à 3, l'appareil 1 comprend un boîtier 2, un réceptacle 3, trois tambours 4, 5, 6, une vis de pressage 7, une bague 8 et un couvercle 9.

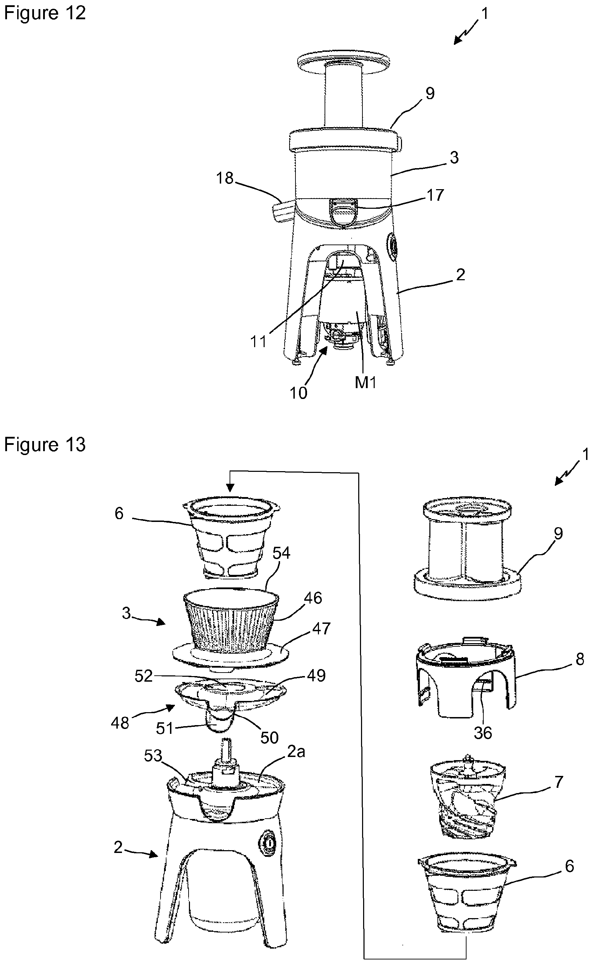

Le boitier 2 intègre des moyens d'entraînement 10 comportant un moteur M1 et un mécanisme de transmission 11 permettant l'entraînement en rotation d'un axe d'entraînement 12 agencé selon un axe vertical X, tel que l'illustrent les figures 2 et 12. Le boitier 2 présente une partie supérieure 19.

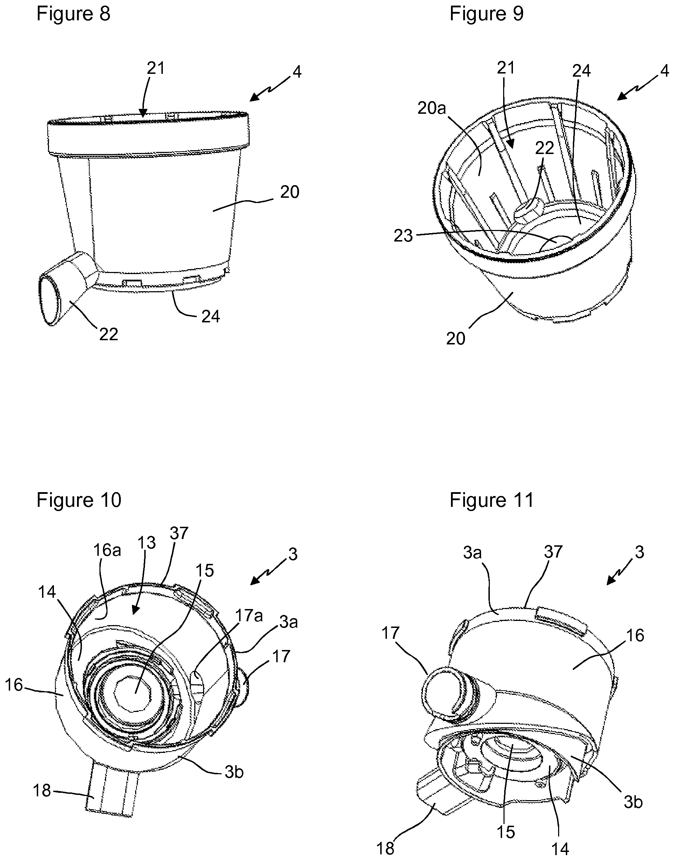

Tel que l'illustrent les figures 10 et 11, le réceptacle 3 définit une enceinte 13 ouverte en partie supérieure 3a, cette enceinte 13 étant délimitée par un fond 14 muni d'une ouverture 15 et présentant une inclinaison, et par une paroi latérale 16. La paroi latérale 16 peut notamment être sensiblement cylindrique, et/ou légèrement tronconique. Cette ouverture 15 constitue un trou de passage de l'axe d'entraînement 12 permettant audit axe d'entraînement 12 de venir se loger dans l'enceinte 13 lorsque le réceptacle 3 est engagé sur le boîtier 2. Un premier conduit 17 est agencé sur la paroi latérale 16 et comprend une entrée 17a qui communique avec l'enceinte 13, cette entrée 17a étant agencée au niveau du point le plus bas du fond 14 incliné. On constate sur la figure 12, la mise en œuvre d'une variante de forme du premier conduit 17, comparée à celle des figures 1, 2, 3, 10 et 11. Un second conduit 18 est agencé en partie inférieure 3b du réceptacle 3. Le second conduit 18 comprend une entrée qui communique avec le fond 14 du réceptacle 3.

Le premier tambour 4, illustré en figure 1, 2, 3, 8 et 9, comprend une paroi latérale 20 étanche, qui définit une enceinte 21. La paroi latérale 20 est de forme tronconique. Ce premier tambour 4 comprend un conduit d'extraction 22 agencé en partie inférieure 20a de la paroi latérale 20. Le conduit d'extraction 22 communique avec l'enceinte 21, comme l'illustre la figure 2. Lorsque le premier tambour 4 est positionné dans le réceptacle 3, le conduit d'extraction 22 est disposé dans l'alignement du premier conduit 17 sur ledit réceptacle 3, comme l'illustre la figure 2. L'axe d'entraînement 12 passe au travers d'un trou 23 agencé sur un fond 24 du premier tambour 4, ce qui permet la connexion de cet axe d'entraînement 12 avec la vis de pressage 7 lorsque celle-ci est insérée dans le premier tambour 4. L'étanchéité de la paroi latérale 20 empêche de filtrer le jus durant le pressage au moyen de la vis de pressage 7. Durant ce pressage, les aliments sont broyés puis évacués sous l'action de la rotation de la vis de pressage 7, l'évacuation se faisant par l'intermédiaire du conduit d'extraction 22, au travers du premier conduit 17. Ces fruits et/ou légumes broyés constituent de la purée.

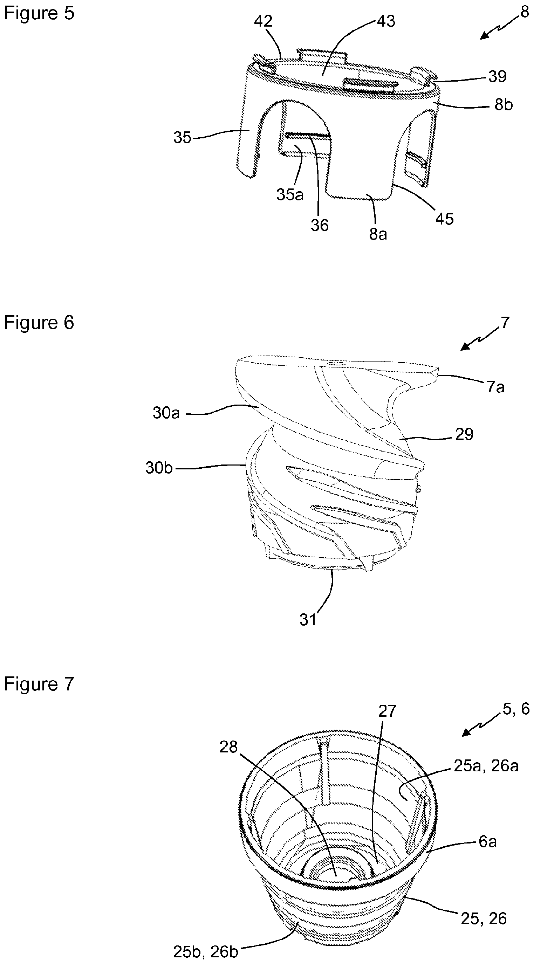

Le second tambour 5 et le troisième tambour 6 ont une configuration identique illustrée en figure 7. Ces second et troisième tambours 5, 6 comprennent chacun une paroi latérale 25, 26 filtrante présentant une porosité permettant de filtrer plus ou moins le jus pour le séparer de la matière sèche, durant le pressage des fruits et légumes. La paroi latérale 25 filtrante du second tambour 5 assure une filtration importante permettant de laisser passer essentiellement les jus, et la paroi latérale 26 filtrante du troisième tambour 6 assure une filtration faible permettant de laisser passer les jus et les matières de faibles granulométries, pour la réalisation de coulis. Les parois latérales 25, 26 filtrantes sont de forme tronconique. Ces tambours 5, 6 comprennent chacun un fond 27 muni d'une ouverture 28 qui constitue également un trou de passage de l'axe d'entraînement 12 lorsque l'un desdits tambours 5, 6 est positionné dans le réceptacle 3, durant l'utilisation de l'appareil 1. L'insertion de la vis de pressage 7 permet sa connexion à l'axe d'entraînement 12. La rotation de la vis de pressage 7 permet le pressage des fruits et/ou légumes et la filtration du jus ou du coulis (non illustré) au travers de la paroi latérale 25, 26 filtrante. Ce jus ou coulis se retrouve alors dans l'enceinte 13 du réceptacle 3, entre une face interne 16a de la paroi latérale 16 de l'enceinte 3 et une face externe 25b, 26b de la paroi latérale 25, 26 filtrante du tambour 5, 6. Le jus ou coulis s'écoule dans le fond 14 du réceptacle 3 et est évacué par le premier conduit 17, pour être réceptionné dans un récipient du type verre ou pichet. Concomitamment, les matières sèches des fruits et/ou légumes se déplacent vers le fond 27 à l'intérieur du tambour 5, 6 filtrant, sous l'action de la rotation de la vis de pressage 7, et sont évacuées par un passage (non représenté sur les figures) débouchant dans l'entrée du second conduit 18 lorsque ledit tambour 5, 6 filtrant est en place dans le réceptacle 3. En d'autres termes, le second conduit 18 d'évacuation des matières sèches prolonge ledit passage traversant le fond 27 du tambour 5, 6 présentant une paroi latérale 25, 26 filtrante lorsque ledit tambour est agencé dans ledit réceptacle 3. Les matières sèches sont collectées au moyen d'un récipient du type saladier ou autre.

Tel qu'illustré en figure 6, la vis de pressage 7 comprend un corps 29 muni de deux hélices 30a, 30b. Le corps 29 est configuré pour être inséré dans les tambours 4, 5, 6 tronconiques. Le corps 29 comprend un fond 31 muni d'un trou carré 32, illustré en figure 2, qui est configuré pour recevoir par emboîtement l'axe d'entraînement 12, lequel est également de forme carrée.

En mode d'utilisation, l'un des trois tambours 4, 5, 6 est positionné dans le réceptacle 3, selon que l'on souhaite réaliser une purée, un jus, ou un coulis. La vis de pressage 7 est insérée dans le tambour 4, 5, 6 utilisé, puis le couvercle 9 est positionné sur le réceptacle 3. Les moyens d'entraînement 10 du boîtier 2 sont ensuite activés pour entraîner la rotation de la vis de pressage 7 et les fruits et/ou légumes sont insérés par des embouchures 33, 34 agencées sur le couvercle 9, ce qui permet à la vis de pressage 7 disposée en-dessous de ces embouchures 33, 34, d'emporter les fruits et/ou légumes insérés et de les presser contre une face interne 25a, 26a de la paroi latérale 20, 25, 26 du tambour 4, 5, 6.

La bague 8 sert au rangement des tambours 4, 5, 6 lors de l'inutilisation de l'appareil 1, ou en d'autres termes, lorsque l'appareil est en mode de rangement. Tel qu'illustré en figure 5, la bague 8 comprend une paroi 35 de forme cylindrique d'un diamètre légèrement supérieur à celui de la paroi latérale 16 du réceptacle 3. La paroi 35 présente une face interne 35a comprenant un rebord interne 36. Cela permet d'insérer une partie inférieure 8a ouverte de la bague 8 sur la partie supérieure 3a ouverte du réceptacle 3, jusqu'à ce que le rebord interne 36 vienne en appui contre un bord supérieur 37 dudit réceptacle 3. Lorsque la bague 8 est en position sur le réceptacle 3, l'appareil 1 présente un espace de rangement 38 permettant de réceptionner les trois tambours 4, 5, 6 disposés les uns au-dessus des autres, comme illustré en figures 1 et 2. La forme tronconique des tambours 4, 5, 6 permet avantageusement de les emboîter les uns dans les autres, ce qui permet de réduire leur encombrement en position de rangement et, ainsi, de réduire la hauteur de la paroi 35. La présence du conduit d'extraction 22 sur le premier tambour 4 nécessite son insertion en premier dans le réceptacle 3, lors du rangement. Après la préparation de la purée, du jus ou du coulis, au moyen du tambour 4, 5, 6 adéquat, les éléments sont nettoyés. Le réceptacle 3 est ensuite repositionné sur le boîtier 2, puis le premier tambour 4 est inséré dans le réceptacle 3. Les deux tambours 5, 6 sont ensuite insérés successivement sur le premier tambour 4, puis la vis de pressage 7 est insérée dans le tambour 6 disposé en position supérieure, ou en d'autres termes, dans le tambour 6 positionné au-dessus des deux autres tambours 4, 5. L'ordre de positionnement des tambours 5, 6 pourrait être inversé, sans aucune incidence sur le rangement.

La bague 8 est ensuite positionnée sur le réceptacle 3, puis le couvercle 9 est positionné sur la bague 8. Le diamètre de la paroi 35 de la bague 8 correspond au diamètre d'une partie inférieure 9a cylindrique du couvercle 9, ce qui permet à un bord inférieur 41 du couvercle 9 de reposer sur un bord supérieur 42 de la bague 8. La bague 8 comprend en partie supérieure 8b des organes de retenue 39 configurés pour recevoir des rebords internes 40 agencés en partie inférieure 9a du couvercle 9, de sorte à maintenir le couvercle 9 en position sur la bague 8. Dans l'exemple de réalisation illustré sur les figures les organes de retenue 39 sont verrouillés par baïonnette avec les rebords internes 40.

La bague 8 présente une ouverture 43 en partie supérieure 8b. On constate sur la figure 2 que la bague 8 est dimensionnée de telle sorte qu'une partie supérieure 6a du tambour 6 disposé en position supérieure, c'est-à-dire au-dessus des autres tambours 4, 5, et une partie supérieure 7a de la vis de pressage 7, dépassent légèrement de l'ouverture 43 et viennent se loger dans un espace interne 44 défini en partie inférieure 9a du couvercle 9. Ainsi, cet espace interne 44 sur le couvercle 9 fait également partie de l'espace de rangement 38, en combinaison avec le réceptacle 3 et la bague 8. On pourrait cependant dimensionner la bague 8 pour que la partie supérieure 6a du tambour 6 et la partie supérieure 7a de la vis de pressage 7 soient également logées à l'intérieur de ladite bague 8.

Tel qu'illustré sur les figures 1 et 5, la bague 8 comprend des échancrures 45 qui permettent de visualiser les tambours 4, 5, 6 en position dans l'espace de rangement 38. Tel que bien visible sur la figure 5, les échancrures 45 sont délimitées par des pattes 8a issues de la partie supérieure de la bague 8. Ces échancrures 45 facilitent également la préhension de la bague 8 lors de son positionnement ou de son retrait vis-à-vis du réceptacle 3.

La description qui précède n'a aucun caractère limitatif, de nombreuses variantes de l'appareil 1 étant envisageables sans sortir du cadre de l'invention.

On pourra notamment mettre en œuvre une variante d'appareil 1, telle qu'illustrée sur la figure 13, comparable à celle de l'appareil de pressage décrit dans le document WO2013072597A2. Selon cette configuration de l'appareil 1, le réceptacle 3 est constitué d'un déflecteur 46 de forme tronconique qui comporte une base inférieure 47 ouverte en son centre, de sorte à permettre le passage des jus, coulis, et matières sèches. L'appareil 1 comprend un boîtier 2, deux tambours 5, 6 permettant la réalisation de jus et de coulis, une vis de pressage 7, une bague 8 et un couvercle 9, comme prévu selon la première configuration de l'appareil 1 illustré en figures 1 à 12. On constate sur cette figure 13, une variante de mise en œuvre de la vis de pressage 7.

Cette seconde configuration de l'appareil 1 diffère essentiellement de la première configuration précitée, en ce qui concerne la mise en œuvre du réceptacle 3 et la mise en œuvre des premiers moyens d'évacuation des jus ou coulis et des seconds moyens d'évacuation des matières sèches, non plus sur le réceptacle 3 mais sur le boîtier 2. Pour cela, l'appareil 1 comprend un collecteur 48 amovible configuré pour être positionné sur la partie supérieure 2a du boîtier 2 et pour recevoir la base inférieure 47 du déflecteur 46. Le collecteur 48 comprend une gouttière 49 configurée pour collecter les jus ou coulis qui sortent par la base 47 ouverte du déflecteur 46. Cette gouttière 49 permet d'acheminer les jus ou les coulis jusqu'à un bec 50 de sortie muni d'un système anti-goutte 51. Le bec 50 débouche à l'extérieur du boîtier 2. Le collecteur 48 comprend également une ouverture 52 en son centre, pour le passage des moyens d'entraînement en rotation du boîtier 2, ainsi que pour le passage des matières sèches issues du tambour 4, 5, 6 disposé sur ledit collecteur 48, sous l'action de la vis de pressage 7, jusqu'à une échancrure 53 agencée sur la partie supérieure 2a du boîtier 2 et configurée pour extraire les matières sèches. En position de rangement, le collecteur 48 est positionné sur la partie supérieure 2a du boîtier et le déflecteur 46 est positionné sur le collecteur 48. Le premier tambour 5 est inséré dans le déflecteur 46, le second tambour 6 est inséré dans le premier tambour 5, et la vis de pressage 7 est insérée dans le second tambour 6. La bague 8 est ensuite positionnée sur le déflecteur 46 de manière à ce que les rebords internes 36 de la bague 8 viennent en appui sur le bord supérieur 54 du déflecteur 46. Puis le couvercle 9 est positionné sur la bague 8.

D'autres variantes sont envisageables. On pourrait par exemple prévoir uniquement des tambours filtrants selon la première configuration de l'appareil 1. On pourrait aussi prévoir plus de deux tambours avec des degrés de filtration différents, pour ces deux configurations précitées de l'appareil 1.

De préférence, l'espace de rangement 38 est configuré pour recevoir tous les tambours 4, 5, 6 de l'appareil. A titre de variante, l'espace de rangement 38 pourrait être configuré pour recevoir au moins deux des tambours 4, 5, 6 de l'appareil.

A titre de variante, l'axe d'entraînement 12 des moyens d'entraînement 10 peut être agencé selon une orientation principalement verticale.

La présente invention n'est nullement limitée aux exemples de réalisation décrits et à leurs variantes, mais englobe de nombreuses modifications dans le cadre des revendications.

## Revendications

1. Appareil (1) de pressage d'aliments, comprenant un réceptacle (3), au moins deux tambours (4, 5, 6) interchangeables configurés pour être logés individuellement dans le réceptacle (3) en mode d'utilisation de l'appareil (1), l'un au moins des tambours (4, 5, 6) présentant une paroi latérale (25, 26) filtrante, une vis de pressage (7) configurée pour être logée dans le tambour (4, 5, 6) utilisé et pour presser les aliments contre le tambour (4, 5, 6) utilisé durant sa rotation, un couvercle (9) configuré pour être assemblé avec une partie supérieure du réceptacle (3) en mode d'utilisation de l'appareil, **caractérisé en ce que** ledit appareil comprend une bague (8) configurée pour être assemblée avec la partie supérieure du réceptacle (3) et avec le couvercle (9), l'assemblage de la bague (8) entre le réceptacle (3) et le couvercle (9) permettant de définir un espace de rangement (38) configuré pour recevoir au moins deux des tambours (4, 5, 6), et de préférence tous les tambours (4, 5, 6), ainsi que la vis de pressage (7), en mode de rangement de l'appareil.

2. Appareil (1) de pressage selon la revendication 1, **caractérisé en ce que** les tambours (4, 5, 6) sont configurés pour être engagés les uns dans les autres dans l'espace de rangement (38), ladite vis de pressage (7) étant logée dans le tambour (6) disposé en position supérieure.

3. Appareil (1) de pressage selon l'une des revendications 1 ou 2, **caractérisé en ce que** la bague (8) est configurée pour que la partie supérieure (6a) du tambour (6) disposé en position supérieure et la partie supérieure (7a) de la vis de pressage (7) viennent se loger dans le couvercle (9) lors de son positionnement sur ladite bague (8), en mode de rangement.

4. Appareil (1) de pressage selon l'une des revendications 1 à 3, **caractérisé en ce que** le réceptacle (3) comprend des premiers moyens d'évacuation des jus, coulis ou purées et des seconds moyens d'évacuation des matières sèches.

5. Appareil (1) de pressage selon la revendication 4, **caractérisé en ce que** les premiers moyens d'évacuation comprennent un fond (14) incliné et un premier conduit (17) d'évacuation des jus, coulis ou purées, le fond (14) incliné étant configuré pour diriger les jus ou coulis filtrés vers le premier conduit (17).

6. Appareil (1) de pressage selon la revendication 5, **caractérisé en ce que** les seconds moyens d'évacuation comprennent un second conduit (18) d'évacuation des matières sèches prolongeant un passage traversant le fond (27) du ou de l'un des tambours (4, 5, 6) présentant une paroi latérale (25, 26) filtrante lorsque ledit tambour est agencé dans ledit réceptacle (3).

7. Appareil (1) de pressage selon l'une des revendications 5 ou 6, **caractérisé en ce que** l'un au moins des tambours (4, 5, 6) présente une paroi latérale (20) étanche et comprend en partie inférieure un conduit d'extraction (22) qui communique avec le premier conduit (17).

8. Appareil (1) de pressage selon la revendication 7, **caractérisé en ce que** ledit tambour présentant une paroi latérale (20) étanche est logé dans le réceptacle (3) en mode de rangement et reçoit le ou l'un des tambours (4, 5, 6) présentant une paroi latérale (25, 26) filtrante.

9. Appareil (1) de pressage selon l'une des revendications 1 à 8, **caractérisé en ce qu'**il comporte trois tambours (4, 5, 6) configurés pour réaliser respectivement des purées, des jus, et des coulis.

10. Appareil (1) de pressage selon l'une des revendications 4 à 9, **caractérisé en ce qu'**il comprend un boîtier (2) configuré pour recevoir directement le réceptacle (3), ledit boîtier (2) intégrant des moyens d'entraînement (10) en rotation d'un axe d'entraînement (12) qui s'étend au-dessus dudit boîtier (2), le réceptacle (3) comprenant un premier trou de passage de l'axe d'entraînement (12) et les tambours (4, 5, 6) comprenant un second trou de passage de l'axe d'entraînement (12), des moyens de connexion étant mis en œuvre entre l'axe d'entraînement (12) et la vis de pressage (7).

11. Appareil (1) de pressage selon l'une des revendications 1 à 3, **caractérisé en ce qu'**il comprend un boîtier (2) muni de premiers moyens d'évacuation des jus ou coulis et de seconds moyens d'évacuation des matières sèches, le réceptacle (3) étant constitué d'un déflecteur (46) comportant une ouverture inférieure qui permet le passage des jus, coulis, et matières sèches.

12. Appareil (1) de pressage selon la revendication 11, **caractérisé en ce qu'**il comprend un collecteur (48) agencé sur la partie supérieure (2a) du boîtier (2) et recevant le réceptacle (3), le collecteur (48) comprenant une gouttière (49) configurée pour collecter les jus ou coulis et les acheminer jusqu'aux premiers moyens d'évacuation sur le boîtier, et une ouverture (52) configurée pour acheminer les matières sèches jusqu'aux seconds moyens d'évacuation.

13. Appareil (1) de pressage selon la revendication 12, **caractérisé en ce que** le collecteur (48) est amovible.

14. Appareil (1) de pressage selon l'une des revendications 12 ou 13, **caractérisé en ce que** le collecteur (48) comprend un bec (50) muni d'un système anti-goutte (51), ledit bec (50) débouchant à l'extérieur du boîtier (2).

15. Appareil (1) de pressage selon l'une des revendications 1 à 14, **caractérisé en ce que** le couvercle (9) comprend au moins une embouchure (33, 34) configurée pour acheminer les aliments et les insérer dans le tambour utilisé.

16. Appareil (1) de pressage selon l'une des revendications 1 à 15, **caractérisé en ce que** la bague (8) comprend des échancrures (45) qui permettent de visualiser les tambours (4, 5, 6) en position dans l'espace de rangement (38).

17. Appareil (1) de pressage selon la revendication 16, **caractérisé en ce que** les échancrures (45) sont délimitées par des pattes (8a) issues de la partie supérieure de la bague (8).

## Patentansprüche

1. Gerät (1) zum Pressen von Nahrungsmitteln, umfassend einen Behälter (3), mindestens zwei austauschbare Trommeln (4, 5, 6), die so konfiguriert sind, dass sie im Gebrauchsmodus des Geräts (1) einzeln in dem Behälter (3) untergebracht sind, wobei mindestens eine der Trommeln (4, 5, 6) eine Filterseitenwand (25, 26) vorweist, eine Pressschraube (7), die konfiguriert ist, um in der Trommel (4, 5, 6) untergebracht zu werden, die verwendet wird, um Nahrungsmittel gegen die Trommel (4, 5, 6) zu pressen, die während ihrer Drehung verwendet wird, eine Abdeckung (9), die konfiguriert ist, um mit einem oberen Teil des Behälters (3) im Verwendungsmodus des Geräts zusammengebaut zu sein, **dadurch gekennzeichnet, dass** das Gerät einen Ring (8) umfasst, der konfiguriert ist, um mit dem oberen Teil des Behälters (3) und mit dem Deckel (9) zusammengebaut zu werden, wobei der Zusammenbau des Rings (8) zwischen dem Behälter (3) und der Abdeckung (9) es ermöglich, einen Aufbewahrungsraum (38) zu definieren, der konfiguriert ist, um mindestens zwei der Trommeln (4, 5, 6) und vorzugsweise alle Trommeln (4, 5, 6) sowie die Pressschraube (7) im Aufbewahrungsmodus des Geräts aufzunehmen.

2. Gerät (1) zum Pressen nach Anspruch 1, **dadurch gekennzeichnet, dass** die Trommeln (4, 5, 6) so konfiguriert sind, dass sie ineinander in dem Aufbewahrungsraum (38) eingreifen, wobei die Pressschraube (7) in der Trommel (6) in der oberen Position angeordnet ist.

3. Gerät (1) zum Pressen nach einem der Ansprüche 1 oder 2, **dadurch gekennzeichnet, dass** der Ring (8) so konfiguriert ist, dass das obere Teil (6a) der Trommel (6), die in der oberen Position angeordnet ist, und das obere Teil (7a) der Pressschraube (7) in dem Deckel (9) während seiner Positionierung auf dem Ring (8) im Aufbewahrungsmodus untergebracht sind.

4. Gerät (1) zum Pressen nach einem der Ansprüche 1 bis 3, **dadurch gekennzeichnet, dass** der Behälter (3) erste Mittel zum Abtransport von Säften, Musen oder Pürees und zweite Mittel zum Abtransport von Feststoffen umfasst.

5. Gerät (1) zum Pressen nach Anspruch 4, **dadurch gekennzeichnet, dass** die ersten Mittel zum Abtransport einen geneigten Boden (14) und eine erste Leitung (17) zum Abtransport von Säften, Pürees oder Musen umfassen, wobei der geneigte Boden (14) konfiguriert ist, um die gefilterten Säfte oder Muse zu der ersten Leitung (17) zu leiten.

6. Gerät (1) zum Pressen nach Anspruch 5, **dadurch gekennzeichnet, dass** die zweiten Mittel zum Abtransport eine zweite Leitung (18) zum Abtransport von Feststoffen umfassen, die einen Durchgang fortsetzt, der sich durch den Boden (27) der oder einer der Trommeln (4, 5, 6) erstreckt, die eine Filterseitenwand (25, 26) vorweist, wenn die Trommel in dem Behälter (3) angeordnet ist.

7. Gerät (1) zum Pressen nach einem der Ansprüche 5 oder 6, **dadurch gekennzeichnet, dass** die mindestens eine der Trommeln (4, 5, 6) eine abgedichtete Seitenwand (20) vorweist und im unteren Teil eine Extraktionsleitung (22) umfasst, die mit der ersten Leitung (17) verbunden ist.

8. Gerät (1) zum Pressen nach Anspruch 7, **dadurch gekennzeichnet, dass** die Trommel, die eine abgedichtete Seitenwand (20) vorweist, in dem Behälter (3) im Aufbewahrungsmodus untergebracht ist und die eine oder eine der Trommeln (4, 5, 6) aufnimmt, die eine Filterseitenwand (25, 26) vorweist.

9. Gerät (1) zum Pressen nach einem der Ansprüche 1 bis 8, **dadurch gekennzeichnet, dass** es drei Trommeln (4, 5, 6) aufweist, die zur Herstellung von Pürees, Säften und Musen konfiguriert sind.

10. Gerät (1) zum Pressen nach einem der Ansprüche 4 bis 9, **dadurch gekennzeichnet, dass** es ein Gehäuse (2) umfasst, das konfiguriert ist, den Behälter (3) direkt aufzunehmen, wobei in dem Gehäuse (2) Mittel (10) zum Antreiben einer Antriebswelle (12), die sich über dem Gehäuse (2) erstreckt, in Drehung integriert sind, wobei der Behälter (3) eine erste Durchgangsbohrung der Antriebswelle (12) umfasst, und wobei die Trommeln (4, 5, 6) eine zweite Durchgangsbohrung der Antriebswelle (12) umfassen, wobei Verbindungsmittel zwischen der Antriebswelle (12) und der Pressschraube (7) eingesetzt werden.

11. Gerät (1) zum Pressen nach einem der Ansprüche 1 bis 3, **dadurch gekennzeichnet, dass** es ein Gehäuse (2) umfasst, das mit ersten Mitteln zum Abtransport von Säften oder Musen und zweiten Mitteln zum Abtransport von Feststoffen versehen ist, wobei der Behälter (3) aus einem Abweiser (46) besteht, der eine untere Öffnung aufweist, die den Durchgang von Säften, Musen und Feststoffen ermöglicht.

12. Gerät (1) zum Pressen nach Anspruch 11, **dadurch gekennzeichnet, dass** es einen Sammler (48) umfasst, der an dem oberen Teil (2a) des Gehäuses (2) angeordnet ist und den Behälter (3) aufnimmt, wobei der Sammler (48) eine Rinne (49), die konfiguriert ist, um die Säfte oder Muse zu sammeln und sie zu den ersten Mitteln zum Abtransport an dem Gehäuse zuzuführen, und eine Öffnung (52) umfasst, die konfiguriert ist, um die Feststoffe zu den zweiten Mitteln zum Abtransport zuzuführen.

13. Gerät (1) zum Pressen nach Anspruch 12, **dadurch gekennzeichnet, dass** der Sammler (48) abnehmbar ist.

14. Gerät (1) zum Pressen nach einem der Ansprüche 12 oder 13, **dadurch gekennzeichnet, dass** der Sammler (48) einen Ausguss (50) umfasst, der mit einem Tropfschutzsystem (51) versehen ist, wobei der Ausguss (50) an der Außenseite des Gehäuses (2) mündet.

15. Gerät (1) zum Pressen nach einem der Ansprüche 1 bis 14, **dadurch gekennzeichnet, dass** die Abdeckung (9) mindestens ein Mundstück (33, 34) umfasst, das konfiguriert ist, um die Lebensmittel in die verwendete Trommel zuzuführen und einzubringen.

16. Gerät (1) zum Pressen nach einem der Ansprüche 1 bis 15, **dadurch gekennzeichnet, dass** der Ring (8) Kerben (45) umfasst, die es ermöglichen, die Trommeln (4, 5, 6) in ihrer Position in dem Aufbewahrungsraum (38) zu visualisieren.

17. Gerät (1) zum Pressen nach Anspruch 16, **dadurch gekennzeichnet, dass** die Kerben (45) durch Laschen (8a) begrenzt sind, die vom oberen Teil des Rings (8) ausgehen.

## Claims

1. Device (1) for pressing foodstuffs, comprising a receptacle (3), at least two drums (4, 5, 6) that are interchangeable and are configured to be received individually in the receptacle (3) when the device (1) is in the use mode, with at least one of the drums (4, 5, 6) having a filtering lateral wall (25, 26), a pressing screw (7) that is configured to be received in the drum (4, 5, 6) being used and to press, during rotation thereof, the foodstuffs against the drum (4, 5, 6) being used, a lid (9) that is configured to be fitted to an upper portion of the receptacle (3) when the device is in the use mode, **characterised in that** said device comprises a ring (8) that is configured to be fitted to the upper portion of the receptacle (3) and to the lid (9), wherein fitting the ring (8) between the receptacle (3) and the lid (9) makes it possible to define a storage space (38) that is configured to receive at least two of the drums (4, 5, 6), and preferably all of the drums (4, 5, 6), as well as the pressing screw (7), when the device is in the storage mode.

2. Device (1) for pressing according to claim 1, **characterised in that** the drums (4, 5, 6) are configured to be engaged in one another in the storage space (38), said pressing screw (7) being received in the drum (6) arranged in the upper position.

3. Device (1) for pressing according to one of claims 1 or 2, **characterised in that** the ring (8) is configured so that the upper portion (6a) of the drum (6) arranged in the upper position and the upper portion (7a) of the pressing screw (7) are received in the lid (9) during the positioning thereof on said ring (8), in the storage mode.

4. Device (1) for pressing according to one of claims 1 to 3, **characterised in that** the receptacle (3) comprises first means for removing juices, coulis or mash and second means for removing dry matter.

5. Device (1) for pressing according to claim 4, **characterised in that** the first means for removing comprise a bottom (14) that is tilted and a first conduit (17) for removing juices, coulis or mash, with the tilted bottom (14) being configured to direct the filtered juices or coulis to the first conduit (17).

6. Device (1) for pressing according to claim 5, **characterised in that** the second means for removing comprise a second conduit (18) for removing dry matter that extends a passage passing through the bottom (27) of the or of one of the drums (4, 5, 6) having a filtering lateral wall (25, 26) when said drum is arranged in said receptacle (3).

7. Device (1) for pressing according to one of claims 5 or 6, **characterised in that** at least one of the drums (4, 5, 6) has a sealed lateral wall (20) and comprises in the lower portion a conduit for removing (22) that communicates with the first conduit (17).

8. Device (1) for pressing according to claim 7, **characterised in that** said drum that has a sealed lateral wall (20) is received in the receptacle (3) in the storage mode and received the or one of the drums (4, 5, 6) that has a filtering lateral wall (25, 26).

9. Device (1) for pressing according to one of claims 1 to 8, **characterised in that** it comprises three drums (4, 5, 6) configured to respectively produce mash, juices and coulis.

10. Device (1) for pressing according to one of claims 4 to 9, **characterised in that** it comprises a case (2) that is configured to directly receive the receptacle (3), said case (2) integrated means of driving (10) in rotation of a drive shaft (12) which extends above said case (2), the receptacle (3) comprising a first hole for the passage of the drive shaft (12) and the drums (4, 5, 6) comprising a second hole for the passage of the drive shaft (12), means of connection being implemented between the drive shaft (12) and the pressing screw (7).

11. Device (1) for pressing according to one of claims 1 to 3, **characterised in that** it comprises a case (2) provided with first means of removing juices or coulis and second means for removing dry matter, the receptacle (3) being formed from a deflector (46) that comprises a lower opening that allows for the passage of juices, coulis, and dry matter.

12. Device (1) for pressing according to claim 11, **characterised in that** it comprises a collector (48) arranged on the upper portion (2a) of the case (2) and receiving the receptacle (3), the collector (48) comprising a gutter (49) configured to collect the juices or coulis and convey them to the first means for removing on the case, and an opening (52) configured to convey the dry matter to the second means for removing.

13. Device (1) for pressing according to claim 12, **characterised in that** the collector (48) can be removed.

14. Device (1) for pressing according to one of claims 12 or 13, **characterised in that** the collector (48) comprises a spout (50) provided with an anti-drip system (51), said spout (50) opening outside of the case (2).

15. Device (1) for pressing according to one of claims 1 to 14, **characterised in that** the lid (9) comprises at least one mouth (33, 34) configured to convey the foodstuffs and insert them into the drum being used.

16. Device (1) for pressing according to one of claims 1 to 15, **characterised in that** the ring (8) comprises indentations (45) that make it possible to visualise the drums (4, 5, 6) in position in the storage space (38).

17. Device (1) for pressing according to claim 16, **characterised in that** the indentations (45) are delimited by tabs (8a) coming from the upper portion of the ring (8).
